# EUROPÄISCHE PATENTSCHRIFT

(11) **EP 3 788 410 B1**
(45) Veröffentlichungstag und Bekanntmachung des Hinweises auf die Patenterteilung: **01.03.2023**
(21) Anmeldenummer: 19722030.4
(22) Anmeldetag: 26.04.2019
(51) Int. Cl.: G01V 1/104, B08B 7/02, F28G 7/00, G10K 15/04, B08B 3/12, B08B 7/00, F15B 15/00

(54) **PNEUMATISCHER AKTUATOR UND VERFAHREN ZUM BETREIBEN EINES PNEUMATISCHEN AKTUATORS**
PNEUMATIC ACTUATOR AND METHOD FOR OPERATING A PNEUMATIC GENERATOR
ACTIONNEUR PNEUMATIQUE ET PROCÉDÉ DE FONCTIONNEMENT D'UN ACTIONNEUR PNEUMATIQUE

(30) Priorität: 02.05.2018 CH 5532018
(43) Veröffentlichungstag der Anmeldung: 10.03.2021
(73) Patentinhaber: P-Wave AG, 5622 Waltenschwil (CH); Rüegg, Hans, 5622 Waltenschwil (CH)
(72) Erfinder: RÜEGG, Hans, 5622 Waltenschwil (CH)
(74) Vertreter: E. Blum & Co. AG
(86) Internationale Anmeldenummer: PCT/EP2019/060795
(87) Internationale Veröffentlichungsnummer: WO 2019/211204

(56) Entgegenhaltungen:
- DE-T2- 69 302 704
- GB-A- 2 125 897
- US-A- 4 700 611
- US-A1- 2017 037 921
- US-B2- 8 967 034

## Beschreibung

Die Erfindung betrifft einen pneumatischen Aktuator und eine Vorrichtung und ein Verfahren zur Erzeugung von Explosionen, insbesondere von Druckimpulsen hoher Intensität gemäss den unabhängigen Patentansprüchen. Sie bezieht sich insbesondere auf einen Druckwellengenerator und ein Verfahren zum Betreiben eines Druckwellengenerators gemäss dem Oberbegriff der unabhängigen Patentansprüche.

In Druckwellengeneratoren, wie sie in WO 2007/028264 und insbesondere in WO 2010/025574 beschrieben sind, wird eine Hilfs- und eine Hauptexplosion in voneinander abgetrennten Kammern gezündet. Die Hilfsexplosion dient dazu, einen Verschluss der Hauptexplosionskammer direkt oder über anderweitige Riegelmechanismen freizugeben, so dass eine nachfolgende Hauptexplosion nicht mit voller Kraft auf den Verschluss wirkt und diesen entsprechend beeinträchtigt bzw. zerstört. Zwischen der Hilfs- und Hauptexplosion findet entsprechend eine Explosionsverzögerung statt. Eine solche Verzögerung erfolgt beispielsweise mittels einer Verzögerungsleitung, in welcher eine Explosion von einer Hilfs- in eine Hauptkammer geführt wird oder mittels verzögerter Zündung in den beiden Kammern über separate, in den Kammern vorhandene Zündvorrichtungen.

Betreffend Aufbau und Ausführung der Zündung und Explosionsverzögerung, sowie auch betreffend beispielhafter Ausführungen und Funktionsweisen eines Druckwellengenerators, wird auf die beiden vorgenannten Schriften WO 2007/028264 und WO 2010/025574 verwiesen.

Speziell im Druckwellengenerator der Schrift WO 2010/025574 sind eine Hilfs- und eine Hauptexplosionskammer über einen beweglichen Kolben gegeneinander abgedichtet. Der Kolben verschliesst zudem eine Ablassöffnung für eine in der Hauptexplosionskammer erzeugte Druckwelle. Unmittelbar vor einer Zündung einer Explosion sind Hilfs- und Hauptexplosionskammer des Druckwellen- oder Druckwellengenerators mit einem explosiven Gasgemisch, typischerweise mit Überdruck, gefüllt. Durch die Gasexplosionen in Hilfs- und Hauptexplosionskammer entstehen sehr hohe Drücke von bis zu 1000 bar und Temperaturen bis zu 4000°C. In der Regel liegen die Drücke über 500 bar und die Temperaturen über 2000°C.

Damit einerseits die Hauptexplosionskammer nicht zu früh geöffnet wird, weil sonst die Explosionsenergie nicht optimal genutzt werden kann, und damit sie auch nicht zu spät geöffnet wird, wodurch die Vorrichtung zerstört werden kann, soll die Öffnung sehr schnell geschehen. Es besteht damit ein Bedarf nach einem Aktuator, welcher ein schnelles Öffnen des Kolbens erlaubt, und dabei Umgebungsbedingungen, Arbeitsfrequenzen und Kräfte, wie sie in Verbindung mit einem Druckwellengenerator auftreten, verkraften kann. Ein derartiger pneumatischer Aktuator ist beispielsweise aus US 8,967,034 B2 bekannt.

Es ist somit Aufgabe der Erfindung, einen pneumatischen Aktuator zu schaffen, welcher zur Verwendung mit einem Druckwellengenerator geeignet ist und diese Anforderungen mindestens teilweise genügt.

Diese Aufgabe wird durch einen pneumatischen Aktuator und ein Verfahren zum Betreiben eines pneumatischen Aktuators gemäss den Patentansprüchen gelöst.

Gemäss der Erfindung liegt vor: Ein **pneumatischer Aktuator,** insbesondere zur Verwendung in einem Druckwellengenerator, aufweisend
- eine erste Kolbenfläche welche gegen ein gasförmiges Arbeitsmedium in einem ersten Volumen wirkt, wobei ein Druck im ersten Volumen auf die erste Kolbenfläche eine Aktuatorkraft in eine erste Richtung bewirkt;
- eine zweite Kolbenfläche welche gegen das Arbeitsmedium in einem zweiten Volumen wirkt, wobei ein Druck im zweiten Volumen auf die zweite Kolbenfläche eine Aktuatorkraft in eine zweite, der ersten entgegengesetzte Richtung bewirkt;
- eine Drossel zwischen dem ersten Volumen und dem zweiten Volumen, welche einen Gasaustausch zwischen dem ersten Volumen und dem zweiten Volumen erlaubt;
- eine Ein/Auslass-Öffnung des ersten Volumens zum Einbringen und Ablassen des Arbeitsmediums in das respektive aus dem ersten Volumen;
- wobei die erste Kolbenfläche grösser als die zweite Kolbenfläche ist.

In Ausführungsformen weist der pneumatische Aktuator eine Endlagendämpfung auf, insbesondere durch Verschliessen der Ein/Auslass-Öffnung. Damit wird also die Ein/Auslass-Öffnung bezüglich des ersten Volumens verschlossen.

In Ausführungsformen ist ein Kolben-Verschlusselement zum Verschliessen der Ein/Auslass-Öffnung angeordnet. Damit kann die Endlagendämpfung in einfacher Weise durch ein Element des Kolbens selber realisiert werden.

In einem Verfahren zum Betreiben des pneumatischen Aktuators werden die folgenden Schritte ausgeführt:
- Füllen des ersten Volumens mit einem unter Druck stehenden gasförmigen Arbeitsmedium, insbesondere mittels eines Füllventils, beispielsweise eines Pressluftventils;
- Druckausgleich zwischen dem ersten Volumen und dem zweiten Volumen durch die Drossel und dadurch, aufgrund einer Flächendifferenz der ersten Kolbenfläche und der zweiten Kolbenfläche, Bewegen des Aktuators in die erste Richtung;
- Ablassen mindestens eines Teils des Arbeitsmediums aus dem ersten Volumen, insbesondere durch Öffnen der Ein/Auslass-Öffnung;
- durch einen rascheren Druckabfall im ersten Volumen als im zweiten Volumen, Bewegen des Aktuators in die zweite Richtung.

Es ist somit möglich, mit einfachen Mitteln - nur dem Füllventil und der Ein/Auslass-Öffnung - eine Hin- und Her-Bewegung des Aktuators zu realisieren. Dies ist eine Folge einerseits der Flächendifferenz zwischen den Kolbenflächen und andererseits der Drossel zwischen den beiden Volumina.

Die Ein/Auslass-Öffnung kann relativ gross gestaltet werden, um den raschen Druckabfall im ersten Volumen zu bewirken.

In Ausführungsformen ist das Kolben-Verschlusselement auch zum Abtrennen einer Arbeitsmedium-Füllleitung bezüglich des ersten Volumens angeordnet. Damit können hohe Druckstösse in der Füllleitung vermieden werden.

In Ausführungsformen sind die beiden Volumina als Teile eines gemeinsamen Arbeitsraums eines Zylinders realisiert, in welchem ein einziger Kolben angeordnet ist, an welchem die beiden Kolbenflächen ausgebildet sind.

Damit wird die Abdichtung der Kolben gegen den (nun gemeinsamen) Zylinder unkritisch. Es kann sogar ein Spalt zwischen Kolben und Zylinder vorliegen. Dieser hat die Funktion der Drossel zwischen den beiden Volumina. Der Druckausgleich findet also durch diesen Spalt statt. Damit ist eine weitere Vereinfachung der Konstruktion möglich. Die Drossel ist in dieser Ausführungsform also durch den Spalt zwischen Zylinder und Kolben gebildet. Dabei wird auf eine sonst übliche Dichtung des Kolbens verzichtet.

In andern Ausführungsform liegen die beiden Volumina und Kolbenflächen an separaten Kolben in separaten Zylindern, und sind die beiden separaten Kolben mechanisch gekoppelt und sind dabei auch ihre Bewegungen gekoppelt.

In Ausführungsformen sind die erste Kolbenfläche und ein Kolben-Verschlusselement zum Verschliessen der Ein/Auslass-Öffnung an demselben Kolben ausgebildet. Damit ist eine besonders einfache und zuverlässige Konstruktion möglich.

In Ausführungsformen weist der pneumatische Aktuator ein Zylinder-Ablassventil auf, zum raschen Ablassen des Arbeitsmediums aus dem ersten Volumen durch Öffnen der Ein/Auslass-Öffnung. Das Zylinder-Ablassventil weist eine Kolbenfläche auf, an welcher bei Beaufschlagung mit dem Arbeitsmedium eine Kraft zum Schliessen des Zylinder-Ablassventils entsteht, und eine Ventilfläche, an welcher bei Beaufschlagung mit dem Arbeitsmedium eine Kraft in Öffnungsrichtung des Zylinder-Ablassventils entsteht, wobei die Ventilfläche kleiner als die Kolbenfläche ist. Damit kann, indem beide Flächen mit demselben Druck beaufschlagt werden, das Zylinder-Ablassventil in die geschlossene Stellung gebracht und gehalten werden.

In Ausführungsformen weist der pneumatische Aktuator ein Ablass-Pilotventil zum Ablassen von Arbeitsmedium aus einem Ablassventil-Volumen auf, in welchem das Arbeitsmedium auf die Kolbenfläche wirkt. Damit kann ein kurzzeitiges, vorübergehendes Ungleichgewicht des Drucks auf die beiden Flächen erzeugt werden, wodurch das Zylinder-Ablassventil geöffnet wird.

In Ausführungsformen ist eine Arbeitsmedium-Füllleitung zum Füllen sowohl des Ablassventil-Volumens als auch des ersten Volumens mit Arbeitsmedium unter demselben Druck angeordnet. Damit kann einerseits derselbe Druck in den beiden Volumina erreicht werden, und andererseits - indem die Füllleitung zwischen den beiden Volumina als Drossel wirkt - das vorübergehende Ungleichgewicht realisiert.

Der Druck im Arbeitsmedium beträgt beispielsweise zwischen 50 bar und 100 bar.

In Ausführungsformen verläuft ein Abschnitt der Arbeitsmedium-Füllleitung, durch welchen das erste Volumen mit dem Arbeitsmedium versorgt wird, durch das Zylinder-Ablassventil, insbesondere einen Absperrkörper des Ventils. Beispielsweise ist dieser Abschnitt ein Durchlass im Absperrkörper, welcher auch in geschlossener Stellung des Ventils einen kleinen Durchfluss durch das Ventil zulässt.

In Ausführungsformen verläuft ein Abschnitt der Arbeitsmedium-Füllleitung, durch welchen das erste Volumen mit dem Arbeitsmedium versorgt wird, durch ein Gehäuse des Druckwellengenerators.

In Ausführungsformen ist eine Linearführung des Kolbens gebildet, indem der Kolben eine hintere Verschlussführung umschliesst und entlang der hinteren Verschlussführung linear in eine Bewegungsrichtung bewegbar ist, und ein sich in Bewegungsrichtung vom Kolben weg erstreckendes hohlzylindrisches Kolbenverbindungselement ein Lagerelement umschliesst, welches an der hinteren Verschlussführung befestigt ist. Dabei ist das zweite Volumen zwischen dem Kolben, einer Innenseite des Kolbenverbindungselements, dem Lagerelement und der hinteren Verschlussführung gebildet. Typischerweise ist die hintere Verschlussführung fest mit dem Gehäuse verbunden.

Damit kann, als Verlängerung des hohlzylindrischen Kolbenverbindungselementes ein hohlzylindrisches Element angetrieben werden, was in bestimmten Anwendungen von Vorteil ist. Beispielsweise ist dies der Fall beim nachfolgend beschriebenen Druckwellengenerator mit einem hohlzylindrischen Verschlusselement.

Ein **Druckwellengenerator** weist auf: eine Hauptexplosionskammer, ein Verschlusselement, welches in einer Schliessstellung die Hauptexplosionskammer gegenüber einem Auslass verschliesst und in einer Öffnungsstellung ein Ausströmen von Explosionsgasen aus der Hauptexplosionskammer in den Auslass ermöglicht, und ein Zündmittel zum Zünden einer Explosion in der Hauptexplosionskammer. Dabei weist der Druckwellengenerator einen pneumatischen Aktuator auf, insbesondere wie oben beschreiben, mit welchem das Verschlusselement von der Schliessstellung in die Öffnungsstellung bringbar ist und insbesondere auch von der Öffnungsstellung in die Schliessstellung bringbar ist. Damit ist ein Druckwellengenerator realisiert, der wiederholt Explosionen und entsprechende Druckwellen erzeugen kann.

In Ausführungsformen weist der Druckwellengenerator eine Steuerung auf, welche dazu ausgebildet ist, eine Öffnungsbewegung des Verschlusselements auszulösen, wenn ein Druck in der Hauptexplosionskammer einen vorgegebenen Schwellwert überschreitet. Damit kann das Öffnen der Hauptexplosionskammer automatisch an sich verändernde Verhältnisse bei der Explosion, die sich auf die Geschwindigkeit der Ausbreitung der Explosion auswirken, angepasst werden. Ist die Zeitdauer zwischen Zündung und maximalem Explosionsdruck bekannt, kann das Öffnen der Hauptexplosionskammer auch nach einer festen Öffnungsverzögerungszeit geschehen. In diesem Fall kann auf die Druckmessung verzichtet werden. Die Anwendung ist vorgesehen für Umstände, bei denen sich die Explosion relativ langsam ausbreitet, also die Öffnungsbewegung nach der Zündung beginnen darf.

In Ausführungsformen ist das Zündmittel ein dauernd mit Energie versorgbares Zündmittel, insbesondere eine Glühkerze. Somit geschieht das Zünden der Explosion in der Hauptexplosionskammer durch dieses Zündmittel respektive die Glühkerze. Damit geschieht eine spontane Zündung des Gasgemisches entsprechend Druck, Temperatur und Zusammensetzung des Gasgemisches.

In Ausführungsformen weist also der Druckwellengenerator eine Steuerung auf, welche dazu ausgebildet ist, die Explosion in der Hauptexplosionskammer aktiv zu zünden, oder welche dazu ausgebildet ist, einen Zeitpunkt einer spontanen Zündung zu detektieren, und welche ferner dazu ausgebildet ist, nach Ablauf einer vorgebbaren Zündverzögerungszeit nach dem Zünden eine Öffnungsbewegung des Verschlusselements auszulösen.

In Ausführungsformen weist der Druckwellengenerator eine Steuerung auf, welche dazu ausgebildet ist, eine Öffnungsbewegung des Verschlusselements auszulösen, und nach Ablauf einer vorgebbaren Zündverzögerungszeit nach dem Auslösen der Öffnungsbewegung die Explosion in der Hauptexplosionskammer zu zünden. Die Anwendung ist vorgesehen für Umstände, bei denen sich die Explosion relativ schnell ausbreitet, also die Öffnungsbewegung bereits vor der Zündung beginnen soll. In diesem Fall kann das Zünden der Explosion in der Hauptexplosionskammer durch eine Zündkerze geschehen.

In Ausführungsformen liegt eine Zündzeit, d.h. eine Zeitdauer zwischen Zündung und dem Erreichen des maximalen Druckes in der Hauptexplosionskammer, im Bereich von 30 ms bis 150 ms.

In Ausführungsformen liegt eine Zeitdauer zwischen dem Auslösen der Öffnungsbewegung des Verschlusselements, beispielsweise durch Betätigen eines Ablass-Magnetventils, und der maximalen Öffnung des Verschlusselements im Bereich von 20 ms bis 60ms.

Ein **Verfahren** zum Betreiben eines Druckwellengenerators mit einer Hauptexplosionskammer geschieht unter Verwendung eines pneumatischen Aktuators, welcher aufweist:
- eine erste Kolbenfläche welche gegen ein gasförmiges Arbeitsmedium in einem ersten Volumen wirkt, wobei ein Druck im ersten Volumen auf die erste Kolbenfläche eine Aktuatorkraft in eine erste Richtung bewirkt;
- eine zweite Kolbenfläche welche gegen das Arbeitsmedium in einem zweiten Volumen wirkt, wobei ein Druck im zweiten Volumen auf die zweite Kolbenfläche eine Aktuatorkraft in eine zweite, der ersten entgegengesetzte Richtung bewirkt.

Das Verfaltren weist die wiederholte Durchführung der folgenden Schritte auf:
a) Füllen des ersten Volumens mit einem unter Druck stehenden gasförmigen Arbeitsmedium, insbesondere mittels eines Füllventils, beispielsweise eines Pressluftventils;
b) Druckausgleich zwischen dem ersten Volumen und dem zweiten Volumen durch eine Drossel und dadurch, aufgrund einer Flächendifferenz der ersten Kolbenfläche und der zweiten Kolbenfläche, Bewegen des Aktuators in die erste Richtung und dadurch Bewegen des Verschlusselements in eine Schliessrichtung und Verschliessen der Hauptexplosionskammer;
c) Befüllen der Hauptexplosionskammer mit einem explosionsfähigen Gemisch;
d) Zünden einer Explosion in der Hauptexplosionskammer, und Ablassen mindestens eines Teils des Arbeitsmediums aus dem ersten Volumen, insbesondere durch Öffnen einer Ein/Auslass-Öffnung des ersten Volumens, und dadurch Öffnen der Hauptexplosionskammer;
e) durch einen rascheren Druckabfall im ersten Volumen als im zweiten Volumen, Bewegen des Aktuators in die zweite Richtung und dadurch Bewegen, eines Verschlusselements in Öffnungsrichtung zum Öffnen der Hauptexplosionskammer bezüglich eines Auslasses, und Ablassen von Explosionsgasen aus der Hauptexplosionskammer durch den Auslass.

Die Schritte a) b) und c) können gleichzeitig oder zeitlich überlappend durchgeführt werden. Schritt d) wird typischerweise nach den Schritten a) b) und c) durchgeführt. Bei Schritt d) geht das Öffnen der Hauptexplosionskammer, ausgelöst durch das Öffnen der Ein/Auslass-Öffnung, unmittelbar in den Schritt e) über.

In Ausführungsformen wird das Zünden der Explosion in der Hauptexplosionskammer vor dem Öffnen der Hauptexplosionskammer durchgeführt, und wird zum Öffnen der Hauptexplosionskammer ein Druck in der Hauptexplosionskammer gemessen, und, wird, sobald der Druck einen vorgegebenen Schwellwert übersteigt, das Öffnen der Hauptexplosionskammer ausgelöst.

In Ausführungsformen wird das Zünden der Explosion in der Hauptexplosionskammer **nach** dem Öffnen der Hauptexplosionskammer durchgeführt wird, und wird zuerst das Öffnen der Hauptexplosionskammer ausgelöst, und nach Ablauf einer vorgegebenen Zündverzögerungszeit, die Explosion in der Hauptexplosionskammer gezündet.

Der Druckwellengenerator weist eine Hauptexplosionskammer und eine Hilfsexplosionskammer auf, sowie
- ein Verschlusselement, welches in einer Schliessstellung die Hauptexplosionskammer gegenüber einem Auslass verschliesst und in einer Öffnungsstellung ein Ausströmen von Explosionsgasen aus der Hauptexplosionskammer in den Auslass ermöglicht,
- und eine Zündleitung zum Leiten einer Explosion von einer Hilfsexplosionskammer in die Hauptexplosionskammer,
- wobei ein Zündleitungsventil in der Zündleitung angeordnet ist.

Das Zündleitungsventil dient somit zum Unterbrechen oder Freigeben der Leitung der Explosion von der Hilfsexplosionskammer in die Hauptexplosionskammer. Damit kann der Zeitpunkt, zu welchem die Explosion in der Hauptexplosionskammer ausgelöst wird, kontrolliert werden. Insbesondere kann dadurch die Übertragung der Explosion in die Hauptexplosionskammer verzögert werden. Dadurch wiederum kann die Zündleitung vergleichsweise kurz ausgeführt werden. Und dadurch wiederum kann das Problem eliminiert werden, dass sich eine lange Zündleitung nur mit einem Gas - also nicht einem explosiven Gemisch - füllt. Dies Problem kann bereits bei einer 10cm langen Zündleitung dazu führen, dass sich die Explosion zunächst nicht durch die Zündleitung ausbreitet, sondern erst, nachdem das eingeschlossene Gas aus der Zündleitung ausgestossen wurde.

In Ausführungsformen ist das Zündleitungsventil ein elektrisch angesteuertes Ventil. Ein elektrisch angesteuertes Ventil kann mittels eines Elektromagneten (Magnetventil) angesteuert sein. Das Ventil kann direkt elektrisch angesteuert werden, oder indirekt über ein pneumatisches Pilotventil.

Damit ist eine - in gewissen Grenzen - freie Wahl des Zeitpunktes der Explosion in der Hauptexplosionskammer möglich. Das Zündleitungsventil bestimmt den Zeitpunkt der Explosion, die Zündleitung überträgt die Explosion und liefert die Energie zum Zünden der Hauptexplosionskammer.

In Ausführungsformen ist das Zündleitungsventil durch eine Bewegung des Verschlusselements mechanisch betätigbar. Das Zündleitungsventil ist ein mechanisch angesteuertes Ventil. "Betätigbar" bedeutet, dass die Bewegung des Verschlusselements ein Öffnen und/oder Schliessen des Zündleitungsventils bewirkt. Damit kann mit einfachen Mitteln eine Verzögerung der Zündung in der Hauptexplosionskammer bewirkt werden.

Ferner kann damit sichergestellt werden, dass das Öffnen des Zündleitungsventils zwangsweise an das Öffnen des Verschlusselements gekoppelt ist, so dass die Hauptexplosion nur ausgelöst werden kann, wenn das Verschlusselement bereits geöffnet ist. Dies ist ein sicherheitsrelevanter Aspekt: wenn keine solche zwangsweise Abhängigkeit der Zündung in der Hauptexplosionskammer von der Öffnung des Verschlusselements bestünde, könnte ein Fehler in der Steuerung dazu führen, dass die Hauptexplosion ausgelöst wird, ohne dass das Verschlusselement geöffnet ist. Dies wiederum würde viel höhere Anforderungen an die Druckfestigkeit der Hauptexplosionskammer bedingen.

In Ausführungsformen ist ein Element des Zündleitungsventils durch einen Teil des Verschlusselements gebildet oder ist fest mit dem Verschlusselement verbunden. Damit ist eine einfache, wenig zusätzliche bewegte Teile aufweisende, und damit wenig störungsanfällige mechanische Realisierung des Zündleitungsventils möglich.

In Ausführungsformen weist das Verschlusselement eine Öffnung auf, welche als Zündleitung wirkt oder Teil der Zündleitung ist, und ist die Öffnung durch eine Bewegung des Verschlusselements von der Schliessstellung in die Öffnungsstellung freigebbar. Damit ist eine besonders einfache Realisierung des Zündleitungsventils möglich.

Diese Öffnung oder Aussparung wirkt somit auch als Teil des Zündleitungsventils, insbesondere eines Schieberventils. Die Öffnung oder Aussparung kann einen Durchgang durch eine Wand des Verschlusselements zwischen Hauptexplosionskammer und Hilfsexplosionskammer bilden. Sie kann zusätzlich oder alternativ eine Ausnehmung an einer Fläche einer Wand des Verschlusselements bilden, welche bei einer Öffnungsbewegung des Verschlusselements eine Verbindung zwischen Hauptexplosionskammer und Hilfsexplosionskammer bildet.

In Ausführungsformen ist das Verschlusselement durch eine Explosion in der Hilfsexplosionskammer von der Schliessstellung in die Öffnungsstellung bringbar. Damit ist eine Synchronisation der Bewegung des Verschlusselements mit der Explosion in der Hauptexplosionskammer mit einfachen Mitteln möglich, d.h. mittels der Zündleitung und des Zündleitungsventils.

In Ausführungsformen weist der Druckwellengenerator auf: ein funkenerzeugendes Zündmittel, insbesondere eine **Zündkerze,** zum Auslösen der Explosion in der Hilfsexplosionskammer, und eine zweite Füllleitung zum Befüllen der Hilfsexplosionskammer, wobei die zweite Füllleitung nicht mit der Zündleitung identisch ist. Damit kann die Hilfsexplosionskammer befüllt werden, ohne dass während des Befüllens eine direkte Verbindung zur Hauptexplosionskammer besteht, insbesondere während dem das Zündleitungsventil geschlossen ist.

Ein funkenerzeugendes Zündmittel wird intermittierend mit (elektrischer) Energie versorgt und erzeugt dadurch einen Funken, insbesondere zum Zünden eines Gasgemisches.

Das funkenerzeugende Zündmittel ist während des Befüllens der Hilfsexplosionskammer nicht mit Energie versorgt, es wird erst nach dem Befüllen mit Energie versorgt um die Hilfsexplosion auszulösen.

In einem Verfahren zum Betrieb eines Druckwellengenerators mit einer Hauptexplosionskammer und einer Hilfsexplosionskammer können die folgenden Schritte durchgeführt werden:
- Befüllen der Hauptexplosionskammer und der Hilfsexplosionskammer mit jeweils einem explosionsfähigen Gemisch;
- Zünden einer Explosion in der Hilfsexplosionskammer, insbesondere mit einem funkenerzeugenden Zündmittel;
- Leiten der Explosion von der Hilfsexplosionskammer durch eine Zündleitung, wobei dieses Leiten durch ein Zündleitungsventil unterbrochen wird;
- Öffnen der Hauptexplosionskammer bezüglich eines Auslasses durch Öffnen eines Verschlusselements;
- Öffnen des Zündleitungsventils und dadurch Leiten der Explosion in die Hauptexplosionskammer und Zünden einer Explosion in der Hauptexplosionskammer; und
- Ablassen von Explosionsgasen aus der Hauptexplosionskammer durch den Auslass.

In Ausführungsformen weist der Druckwellengenerator auf: ein nach dem Befüllen dauernd mit Energie versorgbares Zündmittel, insbesondere eine **Glühkerze,** zum Auslösen der Explosion in der Hilfsexplosionskammer, wobei die Zündleitung zum Befüllen der Hilfsexplosionskammer von der Hauptexplosionskammer aus angeordnet ist. Unter "dauernd mit Energie versorgbar" ist zu verstehen, dass das Zündmittel nicht - wie eine Zündkerze - nur impulsweise versorgbar ist, sondern kontinuierlich und während einer Versorgungszeit von beispielsweise mehreren Sekunden oder Minuten oder länger erhitzbar ist. Dadurch kann es aufgeheizt werden und auf einer Betriebstemperatur bleiben. Beispielsweise beträgt die Versorgungszeit oder Heizzeit mindestens fünf oder mindestens zehn Sekunden oder mindestens dreissig Sekunden oder mindestens eine Minute.

Das Zündmittel kann nach dem Befüllen der Hauptexplosionskammer mit Energie versorgt werden und dadurch auf eine hohe Betriebstemperator gebracht werden, typischerweise über 800°C oder um 1000°C oder bis 1300°C, wobei es noch im Kontakt mit dem explosiven Gasgemisch ist. Erst beim Öffnen der Zündleitung strömt das explosive Gasgemisch von der Hauptexplosionskammer durch die Zündleitung in die Hilfsexplosionskammer und wird beim Kontakt mit der Glühkerze gezündet. Die Hilfsexplosionskammer kann dabei relativ klein ausgebildet sein. Insbesondere kann sie nur einen kurzen Rohrabschnitt, im welchem ein Glühelement der Glühkerze angeordnet ist, umfassen.

In einem anderen Verfahren zum Betrieb eines Druckwellengenerators mit einer Hauptexplosionskammer und einer Hilfsexplosionskammer können die folgenden Schritte durchgeführt werden:
- Befüllen der Hauptexplosionskammer mit einem explosionsfähigen Gemisch;
- Bewegen eines Verschlusselements in eine Öffnungsrichtung,
- Öffnen eines Zündleitungsventils, insbesondere durch das Bewegen des Verschlusselements, und dadurch Leiten des explosionsfähigen Gemisches von der Hauptexplosionskammer in die Hilfsexplosionskammer, wobei die Hilfsexplosionskammer nur einen Raum umfassen kann, in welchem ein erhitztes Element eines Zündmittels angeordnet ist;
- Zünden einer Explosion in der Hilfsexplosionskammer, insbesondere mit einem dauernd mit Energie versorgbaren Zündmittel;
- Leiten der Explosion von der Hilfsexplosionskammer durch die Zündleitung in die Hauptexplosionskammer;
- weiteres Bewegen des Verschlusselements in die Öffnungsrichtung zum Öffnen der Hauptexplosionskammer bezüglich eines Auslasses durch Öffnen eines Verschlusselements, und Ablassen von Explosionsgasen aus der Hauptexplosionskammer durch den Auslass.

In Ausführungsformen ist das Verschlusselement durch einen eigenen Aktuator, insbesondere einen pneumatischen Aktuator der Schliessstellung in die Öffnungsstellung bringbar. Damit ist eine unabhängige Auslösung der Hauptexplosion und der der Öffnungsbewegung des Verschlusselements realisierbar.

Auch kann damit, indem die Hilfsexplosion nur zum Zünden der Hauptexplosion mit hoher Energie verwendet wird, und nicht zum Antreiben des Verschlusselements, eine Abdichtung der Hilfsexplosionskammer vergleichsweise einfacher gestaltet werden.

Den beschriebenen Vorrichtungen und Verfahren ist gemeinsam, dass durch die Zündleitung - sei es durch die von der Zündkerze oder die von der Glühkerze ausgelöste Explosion in der Hilfsexplosionskammer - die Explosion in der Hauptexplosionskammer durch eine derart hohe Energie ausgelöst werden kann, welche sofort zu einer schnellen Explosion oder Detonation in der Hauptexplosionskammer führt. Eine Zündung in der Hauptexplosionskammer mittels einer Zündkerze würde - je nach Gasgemisch - zu einer zunächst langsamen Explosion führen.

Damit wiederum ist es möglich, relativ schwach explosive Gasgemische einzusetzen. Beispielsweise kann ein Flüssiggas wie Propangas verwendet werden. Dieses ist sichererer in der Handhabung und unterliegt weniger strengen regulatorischen Vorschriften als beispielsweise Erdgas oder Äthan.

Der pneumatische Aktuator kann mit einem Druckwellengenerator mit nur einer Hauptexplosionskammer eingesetzt werden, oder mit einem Druckwellengenerator mit einer Hauptexplosionskammer und einer Hilfsexplosionskammer, oder in anderen Anwendungen.

In Ausführungsformen ist das Verschlusselement in eine Bewegungsrichtung bewegbar, und existiert mindestens eine Ebene, welche orthogonal zur Bewegungsrichtung ist und sowohl die Hilfsexplosionskammer als auch die Hauptexplosionskammer schneidet. Damit ist eine gute Abdichtung zwischen Hauptexplosionskammer und Hilfsexplosionskammer realisierbar. Auch ist ein kompakter Aufbau der Vorrichtung realisierbar. Gegebenenfalls kann damit auch ein Verschlusselement mit vergleichsweise geringer Masse realisiert werden.

Die oben beschriebene Anordnung der Hauptexplosionskammer bezüglich der Hilfsexplosionskammer kann auch in Ausführungsformen ohne Zündleitung und ohne Zündleitungsventil realisiert werden. Dabei liegt ein Druckwellengenerator mit den folgenden Merkmalen vor:
Druckwellengenerator, mit einer Hauptexplosionskammer und einer Hilfsexplosionskammer,
- einem Verschlusselement, welches in einer Schliessstellung die Hauptexplosionskammer gegenüber einem Auslass verschliesst und in einer Öffnungsstellung ein Ausströmen von Explosionsgasen aus der Hauptexplosionskammer in den Auslass ermöglicht,
- wobei das Verschlusselement durch eine Explosion in der Hilfsexplosionskammer von der Schliessstellung in die Öffnungsstellung bringbar ist,
- wobei das Verschlusselement in eine Bewegungsrichtung bewegbar ist, und mindestens eine Ebene existiert, welche orthogonal zur Bewegungsrichtung ist und sowohl die Hilfsexplosionskammer als auch die Hauptexplosionskammer schneidet.

In Ausführungsformen ist in dieser mindestens einen Ebene betrachtet die Hilfsexplosionskammer durch das Verschlusselement von der Hauptexplosionskammer getrennt. Damit ist eine besonders einfache Konstruktion und gute Abdichtung zwischen den beiden Explosionskammern realisierbar. Ferner ist damit auch die Anordnung einer Zündleitung durch das Verschlusselement möglich, und die Funktion des Verschlusselements als Teil des Schieberventils.

In Ausführungsformen führt die einzige Verbindung, durch welche sich die Explosion von der Hilfsexplosionskammer in die Hauptexplosionskammer ausbreiten könnte, durch die Gasfeder. Das heisst, dass das Gas respektive Arbeitsmedium der Gasfeder ein Ausbreiten der Explosion stoppt.

Es können ein oder mehrere voneinander getrennte Hauptexplosionskammem vorliegen, und eine oder mehrere voneinander getrennte Hilfsexplosionskammern. Eine Hauptexplosionskammer kann mehreren Hilfsexplosionskammern zugeordnet sein, oder umgekehrt, oder jeweils eine Hauptexplosionskammer kann genau einer Hilfsexplosionskammer zugeordnet sein.

In Ausführungsformen sind die Hauptexplosionskammer und die Hilfsexplosionskammer konzentrisch zueinander angeordnet.

Sowohl die Hauptexplosionskammer als auch die Hilfsexplosionskammer können dabei ringförmig respektive torusförmig ausgebildet sein. Insbesondere kann die Hauptexplosionskammer mindestens in einem Abschnitt, der sich in der Bewegungsrichtung des Verschlusselements erstreckt, die Hilfsexplosionskammer umschliessen.

In Ausführungsformen sind die Hauptexplosionskammer und die Hilfsexplosionskammer symmetrisch bezüglich der Bewegungsrichtung angeordnet.

In Ausführungsformen sind die Hauptexplosionskammer und die Hilfsexplosionskammer rotationssymmetrisch bezüglich der Bewegungsrichtung angeordnet.

Dabei können die Hauptexplosionskammer und die Hilfsexplosionskammer, als jeweils eine einzige Kammer oder als mehrere Kammern, entlang eines Umfangs des Druckwellengenerators betrachtet, mindestens in Sektoren vorliegen.

Weitere bevorzugte Ausführungsformen gehen aus den abhängigen Patentansprüchen hervor. Dabei sind Merkmale der Verfahrensansprüche sinngemäss mit den Vorrichtungsansprüchen kombinierbar und umgekehrt.

Im Folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: einen Längsschnitt durch einen Druckwellengenerator;
- Figur 2: einen Querschnitt durch den Druckwellengenerator;
- Figur 3: einen Längsschnitt durch eine andere Ausführungsform;
- Figur 4: einen Ausschnitt des Längsschnittes für eine weitere Ausführungsform; und
- Figur 5: einen Längsschnitt durch eine weitere Ausführungsform.

Grundsätzlich sind in den Figuren gleiche Teile mit gleichen Bezugszeichen versehen.

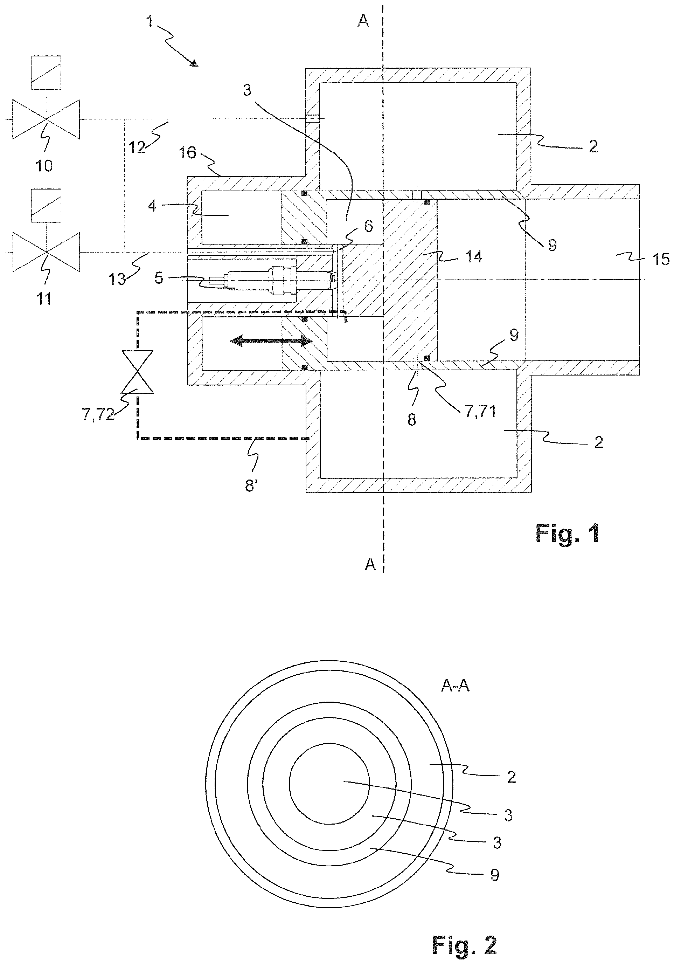

Die **Figuren 1** und **2** zeigen einen Druckwellengenerator 1 mit einer Hauptexplosionskammer 2 und einer Hilfsexplosionskammer 3. Ein Verschlusselement 9 ist zum Verschliessen der Hauptexplosionskammer 2 gegenüber einem Auslass 15 angeordnet. Das Verschlusselement 9 wird durch eine Explosion in der Hilfsexplosionskammer 3 angetrieben, um die Hauptexplosionskammer 2 bezüglich des Auslasses 15 zu öffnen. Eine Gasfeder 4 ist zum Bremsen dieser Öffnungsbewegung des Verschlusselements 9 angeordnet. Die grundsätzliche Funktionsweise eines solchen Druckwellengenerators 1 ist in den eingangs zitierten WO 2007/028264 und WO 2010/025574 erläutert.

Das Verschlusselement 9 ist an einem Lagerelement 14 geführt, welches eine lineare Öffnungs- und Schliessbewegung des Verschlusselements 9 erlaubt. Das Verschlusselement 9 ist hohlzylindrisch geformt und umgibt das Lagerelement 14, welches fest mit einem Gehäuse 16 verbunden ist. Die Bewegungsrichtung, durch einen Doppelpfeil dargestellt, ist typischerweise gleich einer Längsrichtung des Druckwellengenerators 1, und auch gleich einer Ausströmrichtung, in welcher Explosionsgase aus dem Auslass 15 strömen. **Figur 1** zeigt das Verschlusselement 9 in einer geschlossenen Stellung, d.h. die Hauptexplosionskammer 2 ist gegenüber dem Auslass 15 geschlossen.

Der Auslass 15 dient zum gerichteten Auslassen oder Ableiten der Explosionsgase. Damit ist eine Druckwelle erzeugbar.

Eine erste Füllleitung 12 ist zum Befüllen der Hauptexplosionskammer 2 und eine zweite Füllleitung 13 zum Befüllen der Hilfsexplosionskammer 3 angeordnet. Die zweite Füllleitung 13 ist durch das Lagerelement 14 zur Hilfsexplosionskammer 3 geführt. Die beiden Füllleitungen können, wie gezeigt, gemeinsam durch ein Brennstoffventil 10 und ein Oxidatorventil 11 gespeist sein. Alternativ kann jede der Füllleitungen resp. Explosionskammer durch ein jeweils eigenes Brennstoffventil resp. Oxidatorventil gespeist und somit unabhängig von der andern Füllleitung resp. Explosionskammer gespeist sein.

Die beiden Explosionskammern können separat voneinander befüllt werden. Beispielsweise kann dabei erst ein Brenngas mit einem vergleichsweise geringen Druck, beispielsweise 2 bar eingefüllt werden, und anschliessend ein Oxidator, beispielsweise Luft, mit einem hohen Druck, beispielsweise 20 bar.

Im Lagerelement 14 ist eine Zündkerze 5 zum Zünden der Hilfsexplosionskammer 3 angeordnet. Dazu kann gemäss der Ausführungsform der Figur 1 die Zündkerze 5 mittig im Bereich einer Symmetrieachse (typischerweise in Richtung der Längsachse der Vorrichtung) angeordnet sein, und durch eine Verbindungsöffnung 6 mit der Hilfsexplosionskammer 3 verbunden sein.

Zur Zündung der Explosion in der Hauptexplosionskammer 2 mit einer Verzögerung gegenüber der Explosion in der Hilfsexplosionskammer 3 liegt eine Zündleitung 8 vor. In der Figur 1 sind zwei Varianten von Zündleitungen 8 eingezeichnet, wobei in einer Realisierung des Druckwellengenerators 1 in der Regel nur eine vorliegt.
- Die Zündleitung 8 kann als Öffnung im Verschlusselement 9 realisiert sein, die bei der Öffnungsbewegung des Verschlusselements 9 freigegeben wird. Dies kann durch ein Zusammenwirken des Verschlusselements 9 mit einem anderen Teil des Druckwellengenerators 1 geschehen. Hier ist dies beispielhaft das Lagerelement 14, wobei dieses mit dem Verschlusselement 9 ein Schieberventil 71 als Zündleitungsventil 7 bildet: indem das Verschlusselement 9 entlang des Lagerelements 14 bewegt wird, öffnet sich das Schieberventil 71.
- Die Zündleitung kann als Leitung 8' (gestrichelt dargestellt) mit einem darin angeordneten Zündleitungsventil 7 realisiert sein. Diese kann ein Magnetventil 72 sein, oder allgemein ein elektrisch angesteuertes Ventil.

Gemäss Ausführungsformen (nicht dargestellt) wird das Zündleitungsventil 7 bei der Öffnungsbewegung des Verschlusselements 9 mechanisch betätigt. Dazu kann eine mechanische Übertragungsvorrichtung vorliegen. Diese kann verstellbar sein, so dass die Öffnung des Zündleitungsventils 7 - je nach Einstellung - bei unterschiedlichen Stellungen des Verschlusselements 9 stattfindet. Auch dabei kann das Öffnen des Zündleitungsventils 7 zwangsweise an die Öffnung des Verschlusselements 9 gekoppelt sein, so dass die Hauptexplosion nur ausgelöst werden kann, wenn das Verschlusselement 9 bereits geöffnet ist.

Durch das Vorliegen des Zündleitungsventils 7 kann der Zeitpunkt der Übertragung einer Explosion von der Hilfsexplosionskammer 3 in die Hauptexplosionskammer 2 kontrolliert werden.

**Figur 2** zeigt eine konzentrische Anordnung der Hauptexplosionskammer 2, welche die Hilfsexplosionskammer 3 - mindestens in einem Abschnitt, der sich in der Bewegungsrichtung des Verschlusselements 9 erstreckt - in radialer Richtung umgibt und durch das Verschlusselement 9 von ihr getrennt ist.

Das Verschlusselement 9 umgibt das Lagerelement 14, wobei die Hilfsexplosionskammer 3 zwischen Verschlusselement 9 und Lagerelement 14 ausgebildet ist. Beim Verschieben des Verschlusselements 9 entlang der Bewegungsrichtung ändert sich das Volumen der Hilfsexplosionskammer 3. Zwischen dem Verschlusselement 9 und einem Gehäuse 16 ist ein ebenfalls durch diese Verschiebung veränderliches Volumen der Gasfeder 4 ausgebildet. Die Gasfeder 4 wirkt auch als Sperre gegen ein Ausbreiten einer Explosion von der Hilfsexplosionskammer 3 in die Hauptexplosionskammer 2.

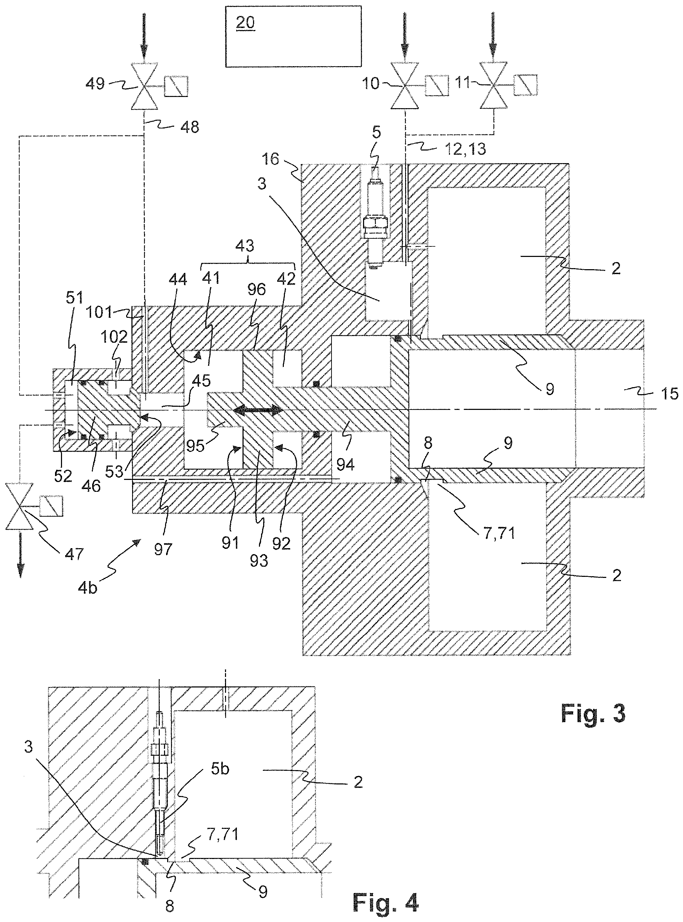

**Figur 3** zeigt einen Druckwellengenerator 1 gemäss einer anderen Ausführungsform. Die Funktionsweise der Elemente Hauptexplosionskammer 2, Verschlusselement 9, Zündleitungsventil 7 resp. Schieberventil 71, Zündleitung 8 und Auslass 15 ist im Wesentlichen gleich wie bei der Ausführungsform der Figur 1.

Die Hilfsexplosionskammer 3 ist jedoch nicht zum Antreiben des Verschlusselements 9 angeordnet, sondern nur zum Erzeugen der Hilfsexplosion. Die Energie der Hilfsexplosion löst, nach Freigabe des Schieberventils 71 durch die Öffnungsbewegung des Verschlusselements 9, die Zündung der Explosion in der Hauptexplosionskammer 2 aus.

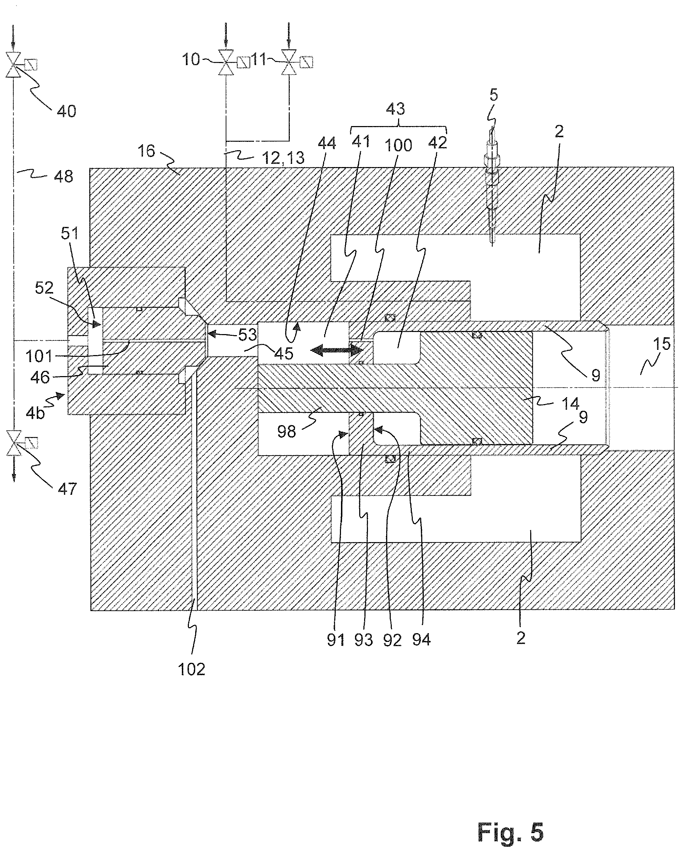

Die Öffnungsbewegung des Verschlusselements 9 wird bewirkt durch eine aktive Gasfeder oder pneumatischen Aktuator 4b. Diese weist einen zylindrischen Arbeitsraum 43 mit einem darin bewegten Kolben 93 auf, dessen Bewegung mit der Bewegung des Verschlusselements 9 gekoppelt ist, insbesondere indem sie fest miteinander verbunden, insbesondere einteilig ausgebildet sind. In den Ausführungsformen der **Figuren 3** und **5** geschieht die Kopplung durch ein Kolbenverbindungselement 94. In der **Figur 3** ist dies eine Kolbenstange, in der **Figur 5** ist dies ein Hohlzylinder.

Der Kolben 93 teilt den Arbeitsraum 43 in eine erstes Volumen 41 und ein zweites Volumen 42 auf. Zwischen einer Zylinderinnenwand 44 des Arbeitsraums 43 und dem Kolben 93 liegt keine Dichtung vor. Es kann insbesondere auch ein kleiner Spalt vorliegen, im Folgenden Kolbenspalt 96 genannt. Dieser erlaubt einen Gasaustausch zwischen den beiden Volumina und wirkt dabei insbesondere als Drossel. In anderen Ausführungsformen kann eine separate Leitung zwischen dem ersten Volumen 41 und dem zweiten Volumen 42 angeordnet sein, und eine Drossel aufweisen, welche zusätzlich oder alternativ zum Kolbenspalt 96 den Gasaustausch zulässt. Eine solche Drossel kann auch als Kolbendrossel 100 durch eine oder mehrere Bohrungen durch den Kolben 93 realisiert sein, welche somit ebenfalls einen Gasaustausch zwischen den beiden Volumina erlaubt.

Ein Gasdruck des Arbeitsmediums im ersten Volumen 41 bewirkt eine Kraft entgegen der Richtung der Öffnungsbewegung des Verschlusselements 9, wobei eine dabei wirksame Fläche eine erste Kolbenfläche 91 ist.

Ein Gasdruck des Arbeitsmediums im zweiten Volumen 42 bewirkt eine Kraft in Richtung der Öffnungsbewegung des Verschlusselements 9, wobei eine dabei wirksame Fläche eine zweite Kolbenfläche 92 ist.

Dabei ist die zweite Kolbenfläche 92 kleiner als die erste Kolbenfläche 91, bsw. mindestens um fünf oder zehn oder zwanzig Prozent kleiner.

Der Kolben 93 weist ein Kolben-Verschlusselement 95 auf, welches im Verlauf der Öffnungsbewegung einen Zylinder-Ein/Auslass 45 oder Ein/Auslass-Öffnung des ersten Volumens 41 verschliesst. Der Zylinder-Ein/Auslass 45 ist hier konzentrisch zum Arbeitsraum 43 gezeichnet, könnte alternativ aber auch seitlich angeordnet sein. Durch das Verschliessen des Zylinder-Ein/Auslasses 45 wird ein Abbremsen respektive eine Endlagendämpfung der Öffnungsbewegung bewirkt. Gleichzeitig wird auch das Pressluftventil 49 vor einem Druckstoss durch die Pressluft-Füllleitung 48 geschützt.

Der Zylinder-Ein/Auslass 45 kann durch ein Zylinder-Ablassventil 46 geöffnet werden. Das Arbeitsmedium fliesst beispielsweise durch eine Ablass- oder Entlüftungsleitung 102 ab. Das Zylinder-Ablassventil 46 kann einen relativ grossen Ventilquerschnitt aufweisen, verglichen mit einer Füllleitung. Damit ist eine schlagartige Druckreduktion im ersten Volumen 41 realisierbar. Das Zylinder-Ablassventil 46 wird durch einen Druck in einer Pressluft-Füllleitung 48 geschlossen gehalten. Durch Öffnen eines Ablass-Pilotventils 47 kann dieser Druck reduziert werden. Durch das Öffnen des Ablass-Pilotventils wird also die Öffnungsbewegung des Verschlusselements ausgelöst.

Das Zylinder-Ablassventil 46 ist beispielhaft ein Sitzventil mit einem bewegbaren Absperrkörper. Der Absperrkörper weist eine Kolbenfläche 52 auf, an welcher er mit der Druckluft aus der Pressluft-Füllleitung 48 in einem Ablassventil-Volumen 51 beaufschlagt wird. Eine Ventilfläche 53, welche mit dem Druck im Zylinder-Ein/Auslass 45 beaufschlagt ist, ist kleiner als die Kolbenfläche 52. Die Kräfte auf die Kolbenfläche 52 und die Ventilfläche 53 sind einander entgegengesetzt. Wenn das Ablass-Pilotventil 47 geschlossen ist, ist der Gasdruck an den beiden Flächen derselbe, und die Kraft auf die Kolbenfläche 52 höher als jene auf die Ventilfläche 53, wodurch der Absperrkörper respektive das Zylinder-Ablassventil 46 in der geschlossenen Stellung gehalten wird.

Die Pressluft-Füllleitung 48 speist auch, über einen Abschnitt 101 der Pressluft-Füllleitung 48, das erste Volumen 41. Die Pressluft-Füllleitung 48 wiederum ist über ein Pressluftventil 49 gespeist.

Eine Belüftungsleitung 97 bewirkt einen Druckausgleich zwischen der Umgebungsluft und einem Zwischenzylinder. Der Zwischenzylinder liegt zwischen einem hinteren Ende des Verschlusselements 9 und der aktiven Gasfeder respektive dem pneumatischen Aktuator 4b.

In der **Variante** der Ausführungsform der **Figur 3** sind der Arbeitsraum 43 und der Kolben 93 kompakt realisiert. Die gleiche Funktionsweise kann aber auch mit separaten ersten und zweiten Volumina und mit getrennten Kolben mit unterschiedlichen Kolbenflächen realisiert werden. Dabei ist eine Leitung mit einer Drossel zwischen den beiden Volumina angeordnet und sind die Bewegungen der beiden Kolben mechanisch gekoppelt. Das heisst, das eine Linearbewegung eines der beiden Kolben immer auch eine Linearbewegung des anderen Kolbens bedingt.

In den Ausführungsformen der **Figur 3** und auch der anderen Figuren kann ein Kolbenweg beispielsweise zwischen 20 mm und 150 mm betragen, insbesondere zwischen 30 mm und 80 mm. Ein Durchmesser des Kolbens kann beispielsweise zwischen 20 mm und 200 mm betragen, insbesondere zwischen 40 mm und 120 mm.

Die **Figur 3** zeigt den pneumatischen Aktuator 4b in Kombination mit einem Druckwellengenerator 1. Der pneumatische Aktuator 4b ist aber auch in anderen Anwendungen einsetzbar. Dazu kann die Kolbenstange 94 an ein anderes Element gekoppelt sein, respektive die Bewegung der Kolbenstange an die Bewegung des anderem Elements gekoppelt sein.

**Figur 4** zeigt einen Ausschnitt eines Druckwellengenerators 1 gemäss einer anderen Ausführungsform, einer Variante der Ausführungsform der **Figur 3****.** Die Funktionsweise der Elemente Hauptexplosionskammer 2, Verschlusselement 9, Zündleitungsventil 7 resp. Schieberventil 71, Zündleitung 8, Auslass 15 und des pneumatischen Aktuators 4b ist im Wesentlichen gleich wie bei der Ausführungsform der **Figur 3****.**

In dieser Variante weist die Hilfsexplosionskammer 3 keine eigene Füllleitung 13 auf. Sie ist vergleichsweise klein ausgebildet. Anstelle der Zündkerze 5 weist sie eine Glühkerze auf. Diese ist im Betrieb des Druckwellengenerators 1 nicht nur jeweils zu einem Zündzeitpunkt versorgt, sondern ist dauernd versorgbar, d.h. sie kann dauernd respektive über eine längere Zeit, z.B. mehrere Sekunden oder Minuten glühen. Damit kann sie eine hohe Temperatur aufweisen, und damit wiederum ausreichend Energie in das Gasgemisch einbringen, um eine sich rasch ausbreitende Explosion respektive Detonation in der Hauptexplosionskammer 2 auszulösen. Je nach Gasgemisch und Druck wäre dies mit einer Zündkerze nicht möglich, sondern es würde nur zunächst eine Verbrennung ausgelöst, die erst nach einer gewissen Zeit (bsw 30-50 ms) zu einer Explosion führt. Die Zündung in der Hauptexplosionskammer 2 geschieht, indem nach dem Befüllen der Hauptexplosionskammer 2 die Glühkerze mit Energie versorgt und auf ihre Betriebstemperatur gebracht wird. Die kann einige Sekunden dauern, beispielsweise fünf oder zehn Sekunden. Wenn dann durch die Öffnungsbewegung des Verschlusselements 9 das Schieberventil 71 die Zündleitung 8 freigibt, fliesst das explosive Gasgemisch von der Hauptexplosionskammer 2 in die Hilfsexplosionskammer 3 und gerät in Kontakt mit der erhitzten Glühkerze. Diese löst die Explosion in der Hilfsexplosionskammer 3 und durch die Zündleitung 8 auch in der Hauptexplosionskammer 2 aus. Die Öffnungsbewegung des Verschlusselements 9 wird durch den pneumatischen Aktuator 4b bewirkt, wie bereits oben beschrieben ist.

Im Betrieb dieser Variante können die folgenden Verfahrensschritte ausgeführt werden:
- Öffnen des Pressluftventils 49 bei geschlossenem Ablass-Pilotventil 47. Dies hat folgende Auswirkungen: Der Druck in der Pressluft-Füllleitung 48 (z.B. 70 bar) schliesst das Zylinder-Ablassventil 46. Durch die Pressluft-Füllleitung 48 wird das erste Volumen 41 mit Pressluft beaufschlagt. Durch den Kolbenspalt 96 wird auch das zweite Volumen 42 beaufschlagt, wobei mit der Zeit in beiden Volumina derselbe Druck vorliegt. Weil die erste Kolbenfläche 91 grösser als die zweite Kolbenfläche 92 ist, wird der Kolben 93 und damit der Verschlusselement 9 in eine geschlossene Stellung (entgegen der Richtung der Öffnungsbewegung) bewegt.
- Schliessen des Pressluftventils 49. Das Verschlusselement 9 bleibt in der geschlossenen Stellung.
- Öffnen des Brennstoffventils 10 und des Oxidatorventils 11 und dadurch Befüllen der Hauptexplosionskammer 2 und, je nach Ausführungsform, auch der Hilfsexplosionskammer 3. Dabei kann das Brennstoffventil 10 zuerst, bei geschlossenem Oxidatorventil 11, geöffnet werden und eine kontrollierte Menge an Brennstoff bei einem ersten Druck eingebracht werden. Dann kann, bei geschlossenem Brennstoffventil 10, das Oxidatorventil 11 geöffnet und eine Menge Oxidator bis auf einem höheren zweiten Druck eingebracht werden. Durch das Verhältnis des ersten und zweiten Drucks ist der Mengenanteil von Oxidator und Brennstoff einstellbar. Typischerweise wird der Mengenanteil als stöchiometrisches Verhältnis entsprechend der chemischen Reaktion bei der Verbrennung resp. Explosion gewählt. Beispielsweise werden Propan als Brennstoff und Luft als Oxidator verwendet, im Mengenverhältnis respektive Druckverhältnis 1:15 bis 1:24.
- Einer von den folgenden beiden Verfahrensvarianten (mehr dazu weiter unten):
   o Entweder: Auslösen der Hilfsexplosion in der Hilfsexplosionskammer 3 durch Aktivieren der Zündkerze 5, anschliessendes Auslösen der Öffnungsbewegung und, durch Öffnen des Zündleitungsventils 7, Auslösen der Explosion in der Hauptexplosionskammer 2.
   o Oder: Auslösen der Öffnungsbewegung und dadurch anschliessendes Auslösen der Explosion in der Hauptexplosionskammer 2, indem Brenngas durch das Zündleitungsventil 7 zur Glühkerze gelangt.
- In beiden Fällen geschieht das Auslösen der Öffnungsbewegung durch Öffnen des Zylinder-Ablassventils 46, was insbesondere durch Öffnen des Ablass-Pilotventils 47 und Reduktion des Drucks in der Pressluft-Füllleitung 48 geschehen kann. Durch das Öffnen des Zylinder-Ablassventils 46 fällt der Druck im ersten Volumen 41 ab. Der Druck im zweiten Volumen 42 fällt ebenfalls ab, aber wegen der Drosselwirkung des Kolbenspalts 96 langsamer als im ersten Volumen 41. Dadurch wiederum wird die Kraft auf die zweite Kolbenfläche 92 grösser als die Kraft auf die erste Kolbenfläche 91. Dies bewirkt eine Bewegung des Kolbens 93 und damit die Öffnungsbewegung des Verschlusselements 9.
- Bevor der Kolben 93 oder das Verschlusselement 9 an einen Anschlag geraten, verschliesst das Kolben-Verschlusselement 95 den Zylinder-Ein/Auslass 45. Die im (nun kleineren) ersten Volumen 41 verbleibende Luft wird komprimiert und bremst die Bewegung des Kolbens 93 und des Verschlusselements 9. Es wird verhindert, dass das Pressluftventil 49 durch eine Druckspitze beansprucht wird.
- Die Explosionsgase strömen aus der Öffnung, die durch das Verschlusselement 9 freigegeben worden ist, aus.
- Schliessen des Zylinder-Ablassventils 46, insbesondere durch Schliessen des Ablass-Pilotventils 47. Dies kann geschehen, indem eine Kolbenfläche, über welche die Druckluft in der Pressluft-Füllleitung 48 das Zylinder-Ablassventil 46 respektive seinen Absperrkörper in die geschlossene Stellung drückt, grösser ist als eine Fläche, an welcher die Druckluft in Gegenrichtung auf das Zylinder-Ablassventil 46 respektive seinen Absperrkörper wirkt. Nach dem Schliessen des Zylinder-Ablassventils 46 kann der Druck im ersten Volumen 41 noch ausreichend hoch sein (z.B. 20 bar), um auch nach einem Druckausgleich mit dem zweiten Volumen 42 den Kolben 93 zurück zu bewegen und damit das Verschlusselement 9 in die geschlossene Stellung zu bringen.
- Anschliessend kann mit dem Öffnen des Pressluftventils 49 das Verfahren erneut begonnen werden.

Die oben beschriebenen Verfahrensvarianten sind den Varianten der Vorrichtung mit Zündkerze respektive Glühkerze zugeordnet. Die Unterschiede liegen darin, dass
- in der Variante mit Zündkerze die Zündung in der Hilfsexplosionskammer 3 vor dem Auslösen der Öffnungsbewegung geschieht, z.B. 50 ms vorher. In dieser Zeit hat entwickelt sich in der Hilfsexplosionskammer 3 eine Explosion mit ausreichend Energie, um im Verlauf der Öffnung des Zündleitungsventils 7 respektive Schieberventils 71 durch die Öffnungsbewegung die erforderliche rasche Explosion in der Hauptexplosionskammer 2 auszulösen.
- in der Variante mit Glühkerze kann diese bereits ausreichend Energie für die rasche Explosion in der Hauptexplosionskammer 2 einbringen, wenn bei Öffnung des Zündleitungsventils 7 respektive Schieberventils 71 das Gasgemisch zur Glühkerze strömt.

In beiden Varianten dauert es dank der eingebrachten Zündenergie z.B. nur noch rund zwei ms, bis sich die Explosion in der Hauptexplosionskammer 2 ausgebreitet hat. Es baut sich ein Explosionsdruck in der Hauptexplosionskammer 2 auf währendem bereits die Öffnungsbewegung stattfindet. Eine maximale Energie im Gasstrom im Auslass 15 entsteht, wenn der Explosionsdruck zu dem Zeitpunkt maximal ist, wenn auch die Öffnung des Verschlusselements 9 zwischen Hauptexplosionskammer 2 und Auslass 15 maximal ist.

In anderen Ausführungsformen ist die Zündkerze 5 oder die Glühkerze 5b zum Zünden des Gasgemisches respektive zum Auslösen der Explosion in der Hauptexplosionskammer 2 angeordnet. Es liegt in diesen Ausführungsformen insbesondere keine Hilfsexplosionskammer 3 und keine Zündleitung 8 vor. Das Zünden der Explosion in der Hauptexplosionskammer 2 wird durch eine Steuerung 20 mit dem Bewegen des Verschlusselements in die Öffnungsrichtung synchronisiert. Dabei kann, je nach der Geschwindigkeit, mit welcher die Explosion sich in der Hauptexplosionskammer 2 ausbreitet, und sich der Druck in der Hauptexplosionskammer 2 aufbaut, die Bewegung des Verschlusselements 9 vor oder nach der Zündung in der Hauptexplosionskammer 2 geschehen.

Beispielsweise kann die Explosion in der Hauptexplosionskammer 2 sich relativ langsam ausbreiten. Dann kann die Öffnung unter Umständen erst nach der Zündung ausgelöst werden. Im Einzelnen werden dabei die beispielsweise folgenden Schritte zum Betreiben des Druckwellengenerators (1) mit einer Hauptexplosionskammer (2), wiederholt durchgeführt:
- Befüllen der Hauptexplosionskammer (2) mit einem explosionsfähigen Gemisch;
- Zünden einer Explosion in der Hauptexplosionskammer (2);
- Messen eines Drucks in der Hauptexplosionskammer (2), und, sobald der Druck einen vorgegebenen Schwellwert übersteigt, Auslösen einer Öffnung der Hauptexplosionskammer (2), insbesondere mittels eines pneumatischen Aktuators, insbesondere des hier beschriebenen pneumatischen Aktuators (4b);
- Bewegen, mittels des pneumatischen Aktuators (4b), eines Verschlusselements (9) in eine Öffnungsrichtung zum Öffnen der Hauptexplosionskammer (2) bezüglich eines Auslasses (15), und Ablassen von Explosionsgasen aus der Hauptexplosionskammer (2) durch den Auslass (15);
- Verschliessen der Hauptexplosionskammer (2) durch Bewegen des Verschlusselements (9) in eine Schliessrichtung mittels des pneumatischen Aktuators (4b).

Alternativ kann, wenn sich die Explosion vergleichsweise schnell in der Hauptexplosionskammer 2 ausbreitet, die Öffnung unter Umständen schon vor der Zündung ausgelöst werden. Im Einzelnen werden dabei die beispielsweise folgenden Schritte zum Betreiben des Druckwellengenerators (1) mit einer Hauptexplosionskammer (2), wiederholt durchgeführt:
- Befüllen der Hauptexplosionskammer (2) mit einem explosionsfähigen Gemisch;
- Bewegen eines Verschlusselements (9) in eine Öffnungsrichtung, insbesondere mittels eines pneumatischen Aktuators, insbesondere des hier beschriebenen pneumatischen Aktuators (4b);
- Zünden, nach Ablauf einer vorgegebenen Zündverzögerungszeit, einer Explosion in der Hauptexplosionskammer (2);
- weiteres Bewegen des Verschlusselements (9) in die Öffnungsrichtung zum Öffnen der Hauptexplosionskammer (2) bezüglich eines Auslasses (15), und Ablassen von Explosionsgasen aus der Hauptexplosionskammer (2) durch den Auslass (15);
- Verschliessen der Hauptexplosionskammer (2) durch Bewegen des Verschlusselements (9) in eine Schliessrichtung mittels des pneumatischen Aktuators (4b).

Ob sich die Explosion vergleichsweise langsam oder schnell ausbreitet ist unter anderem von dem verwendeten explosiven (Gas)Gemisch abhängig, dessen Druck und Temperatur, dem verwendeten Zündmittel (Glühkerze oder Zündkerze), etc.

Bei Verwendung des pneumatischen Aktuators 4b wie oben beschrieben geschieht Bewegen des Verschlusselements in die Öffnungsrichtung durch die Bewegung des pneumatischen Aktuators in die zweite Richtung. Das Bewegen des Verschlusselements in die Schliessrichtung geschieht durch die Bewegung des pneumatischen Aktuators in die erste Richtung.

**Figur 5** zeigt eine Ausführungsform mit nur einer Hauptexplosionskammer 2, also ohne Hilfsexplosionskammer 3 und ohne Zündleitung 8. Die **Figur 5** zeigt auch einen zu dem von der **Figur 3** verschiedenen alternative pneumatischen Aktuator 4b. Es kann der gesamte in der **Figur 5** gezeigte pneumatische Aktuator oder es können auch nur einzelne Elemente, beispielsweise
- eine Kolbendrossel 100 und/oder
- ein Verschlusselement 9 mit Hohlzylinder anstelle der Kolbenstange als Kolbenverbindungselement 94 und/oder
- ein Zylinder-Ablassventil 46 mit einem Abschnitt 101 der Pressluft-Füllleitung mit einem Druckwellengenerator 1 mit einer Hilfsexplosionskammer 3 wie beispielsweise gemäss **Figur 3** kombiniert sein.

Die Funktionsweise ist grundsätzlich gleich wie jene der Ausführungsform der **Figur 3****,** mit den folgenden Unterschieden in der Realisierung einzelner Elemente:
Das Kolbenverbindungselement 94, welches den Kolben 93 mit dem Verschlusselement 9 verbindet, ist durch einen Hohlzylinder gebildet. Der Kolben 93 umschliesst eine hintere Verschlussführung 98, die als allgemeiner Zylinder, insbesondere als Kreiszylinder ausgebildet sein kann, und ist linear entlang derselben in Bewegungsrichtung bewegbar. Das Kolbenverbindungselement 94 umgibt das Lagerelement 14, welches fest mit einem Gehäuse 16 verbunden ist. Das zweite Volumen 42 liegt zwischen der hinteren Verschlussführung, dem Kolben 93 und der Innenseite des Hohlzylinders respektive des Kolbenverbindungselements 94.

Die Drossel zwischen dem ersten Volumen 41 und dem zweiten Volumen 42 ist als Kolbendrossel 100 durch eine oder mehrere Bohrungen durch den Kolben 93 realisiert. Zusätzlich oder alternativ kann aber auch die Funktion der Kolbendrossel durch einen Spalt zwischen Kolben 93 und hinterer Verschlussführung 98 wahrgenommen werden.

Der Abschnitt 101 der Pressluft-Füllleitung 48, durch welchen das erste Volumen 41 mit dem Arbeitsmedium versorgt wird, verläuft nicht durch das Gehäuse 16 sondern durch den Absperrkörper des Zylinder-Ablassventils 46, beispielsweise als Bohrung, und kann auch Kolbendrossel des Zylinder-Ablassventils 46 genannt werden. Somit wird das erste Volumen 41 via das Ablassventil-Volumen 51 mit dem Arbeitsmedium versorgt.

Es kann auf eine Endlagendämpfung verzichtet werden. Wenn in der Ausführungsform der Figur 5 eine Endlagendämpfung realisiert werden soll, kann dies wie in der **Figur 3** durch einen vorstehendes Verschlusselement 95 geschehen, welche in den Zylinder-Ein/Auslass 45 einfährt, oder indem der Zylinder-Ein/Auslass 45 seitlich in das erste Volumen 41 hineingeführt ist, und verschlossen wird, indem sich der Kolben 93 bei der Öffnungsbewegung über den Zylinder-Ein/Auslass 45 schiebt.

## Patentansprüche

1. **Verfahren zum Betreiben eines pneumatischen Aktuators** (4b), welcher aufweist
eine erste Kolbenfläche (91) welche gegen ein gasförmiges Arbeitsmedium in einem ersten Volumen (41) wirkt, wobei ein Druck im ersten Volumen (41) auf die erste Kolbenfläche (91) eine Aktuatorkraft in eine erste Richtung bewirkt; eine zweite Kolbenfläche (92) welche gegen das Arbeitsmedium in einem zweiten Volumen (42) wirkt, wobei ein Druck im zweiten Volumen (42) auf die zweite Kolbenfläche (92) eine Aktuatorkraft in eine zweite, der ersten entgegengesetzte Richtung bewirkt;
mit den folgenden Schritten:
• Füllen des ersten Volumens (41) mit einem unter Druck stehenden gasförmigen Arbeitsmedium;
• Druckausgleich zwischen dem ersten Volumen (41) und dem zweiten Volumen (42) durch eine Drossel und dadurch, aufgrund einer Flächendifferenz der ersten Kolbenfläche (91) und der zweiten Kolbenfläche (92), Bewegen des Aktuators in die erste Richtung; und
• Ablassen mindestens eines Teils des Arbeitsmediums aus dem ersten Volumen (41);
**dadurch gekennzeichnet, dass** das Verfahren den folgenden Schritt aufweist:
• durch einen rascheren Druckabfall im ersten Volumen (41) als im zweiten Volumen (42), Bewegen des Aktuators in die zweite Richtung.

2. Verfahren gemäss Anspruch 1, wobei das Füllen des ersten Volumens (41) mittels eines Füllventils (49) geschieht.

3. Verfahren gemäss Anspruch 1 oder 2, wobei das Ablassen mindestens eines Teils des Arbeitsmediums aus dem ersten Volumen (41) durch Öffnen einer Ein/Auslass-Öffnung des ersten Volumens (41) geschieht.

4. Verfahren gemäss Anspruch 2 und 3, wobei mit nur dem Füllventil und der Ein/Auslass-Öffnung eine Hin- und Her-Bewegung des Aktuators zu realisiert wird.

5. **Pneumatischer Aktuator** (4b) zur Ausführung des Verfahrens gemäss einem der vorangehenden Ansprüche, aufweisend
eine erste Kolbenfläche (91) welche gegen ein gasförmiges Arbeitsmedium in einem ersten Volumen (41) wirkt, wobei ein Druck im ersten Volumen (41) auf die erste Kolbenfläche (91) eine Aktuatorkraft in eine erste Richtung bewirkt; eine zweite Kolbenfläche (92) welche gegen das Arbeitsmedium in einem zweiten Volumen (42) wirkt, wobei ein Druck im zweiten Volumen (42) auf die zweite Kolbenfläche (92) eine Aktuatorkraft in eine zweite, der ersten entgegengesetzte Richtung bewirkt;
eine Ein/Auslass-Öffnung (45) des ersten Volumens (41) zum Einbringen und Ablassen des Arbeitsmediums in das respektive aus dem ersten Volumen (41); wobei die erste Kolbenfläche (91) grösser als die zweite Kolbenfläche (92) ist;
**dadurch gekennzeichnet, dass** der pneumatische Aktuator (4b) aufweist:
eine Drossel zwischen dem ersten Volumen (41) und dem zweiten Volumen (42), welche einen Gasaustausch zwischen dem ersten Volumen (41) und dem zweiten Volumen (42) erlaubt.

6. Pneumatischer Aktuator (4b) gemäss Anspruch 5, wobei ein Kolben-Verschlusselement (95) zum Verschliessen der Ein/Auslass-Öffnung (45) angeordnet ist.

7. Pneumatischer Aktuator (4b) gemäss Anspruch 6, wobei das Kolben-Verschlusselement (95) auch zum Abtrennen einer Arbeitsmedium-Füllleitung (48; 101) bezüglich des ersten Volumens (41) angeordnet ist.

8. Pneumatischer Aktuator (4b) gemäss einem der Ansprüche 5 bis 7, wobei die erste Kolbenfläche (91) und die zweite Kolbenfläche (92) an demselben Kolben (93) ausgebildet sind.

9. Pneumatischer Aktuator (4b) gemäss einem der Ansprüche 5 bis 7, wobei die erste Kolbenfläche (91) und die zweite Kolbenfläche (92) an separaten Kolben (93) ausgebildet sind, deren Bewegungen mechanisch miteinander gekoppelt sind.

10. Pneumatischer Aktuator (4b) gemäss einem der Ansprüche 5 bis 9 in Abhängigkeit von Anspruch 6, wobei die erste Kolbenfläche (91) und das Kolben-Verschlusselement (95) zum Verschliessen der Ein/Auslass-Öffnung (45) an demselben Kolben (93) ausgebildet sind.

11. Pneumatischer Aktuator (4b) gemäss einem der Ansprüche 5 bis 10, aufweisend ein Zylinder-Ablassventil (46) zum raschen Ablassen des Arbeitsmediums aus dem ersten Volumen (41) durch Öffnen der Ein/Auslass-Öffnung, wobei das Zylinder-Ablassventil (46) eine Kolbenfläche (52) aufweist, an welcher bei Beaufschlagung mit dem Arbeitsmedium eine Kraft zum Schliessen des Zylinder-Ablassventils (46) entsteht, und eine Ventilfläche (53), an welcher bei Beaufschlagung mit dem Arbeitsmedium eine Kraft in Öffnungsrichtung des Zylinder-Ablassventils (46) entsteht, und wobei die Ventilfläche (53) kleiner als die Kolbenfläche (52) ist.

12. Pneumatischer Aktuator (4b) gemäss Anspruch 11, aufweisend ein Ablass-Pilotventil (47) zum Ablassen von Arbeitsmedium aus einem Ablassventil-Volumen (51), in welchem das Arbeitsmedium auf die Kolbenfläche (52) wirkt.

13. Pneumatischer Aktuator (4b) gemäss Anspruch 11 oder 12, wobei eine Arbeitsmedium-Füllleitung (48) zum Füllen sowohl des Ablassventil-Volumens (51) als auch des ersten Volumens (41) mit Arbeitsmedium unter demselben Druck angeordnet ist.

14. Pneumatischer Aktuator (4b) gemäss Anspruch 13, wobei ein Abschnitt (101) der Arbeitsmedium-Füllleitung (48), durch welchen das erste Volumen (41) mit dem Arbeitsmedium versorgt wird, durch das Zylinder-Ablassventil (46) verläuft, insbesondere durch einen Absperrkörper des Ventils.

15. Pneumatischer Aktuator (4b) gemäss einem der Ansprüche 5 bis 14, wobei eine Linearführung des Kolbens (93) gebildet ist, indem der Kolben (93) eine hintere Verschlussführung (98) umschliesst und entlang der hinteren Verschlussführung linear in eine Bewegungsrichtung bewegbar ist, und ein sich in Bewegungsrichtung vom Kolben (93) weg erstreckendes hohlzylindrisches Kolbenverbindungselement (94) ein Lagerelement (14) umschliesst, welches an der hinteren Verschlussführung (98) befestigt ist, und wobei das zweite Volumen (42) zwischen dem Kolben (93), einer Innenseite des Kolbenverbindungselements (94), dem Lagerelement (14) und der hinteren Verschlussführung (98) gebildet ist.

## Claims

1. **Method for operating a pneumatic actuator** (4b), which comprises
a first piston surface (91) which acts against a gaseous working medium in a first volume (41), wherein a pressure in the first volume (41) causes an actuator force on the first piston surface (91) in a first direction;
a second piston surface (92) which acts against the working medium in a second volume (42), wherein a pressure in the second volume (42) on the second piston surface (92) causes an actuator force in a second direction opposite to the first direction;
with the following steps:
• Filling the first volume (41) with a pressurized gaseous working medium;
• Pressure equalization between the first volume (41) and the second volume (42) by a choke and thereby, due to a surface difference of the first piston surface (91) and the second piston surface (92), moving the actuator in the first direction; and
• Draining at least a portion of the working medium from the first volume (41) ;
**characterized in that** the method has the following step:
• moving the actuator in the second direction by a faster pressure drop in the first volume (41) than in the second volume (42).

2. Method according to claim 1, wherein the filling of the first volume (41) occurs by means of a filling valve (49).

3. Method according to claim 1 or 2, wherein the draining of at least part of the working medium from the first volume (41) is done by opening an inlet/outlet port of the first volume (41).

4. Method according to claim 2 and 3, wherein with only the filling valve and the inlet/outlet opening a reciprocating movement of the actuator is realized.

5. **Pneumatic actuator** (4b) for carrying out the method according to one of the preceding claims, comprising
a first piston surface (91) which acts against a gaseous working medium in a first volume (41), wherein a pressure in the first volume (41) causes an actuator force in a first direction on the first piston surface (91);
a second piston surface (92) which acts against the working medium in a second volume (42), wherein a pressure in the second volume (42) on the second piston surface (92) causes an actuator force in a second direction opposite to the first direction;
an inlet/outlet opening (45) of the first volume (41) for introducing and discharging the working medium into and out of the first volume (41), respectively;
wherein the first piston area (91) is larger than the second piston area (92) ;
**characterized in that** the pneumatic actuator (4b) has:
a choke between the first volume (41) and the second volume (42), which allows gas exchange between the first volume (41) and the second volume (42).

6. Pneumatic actuator (4b) according to claim 5, wherein a piston closure element (95) is arranged for closing the inlet/outlet opening (45).

7. Pneumatic actuator (4b) according to claim 6, wherein the piston closure element (95) is also arranged for disconnecting a working medium filling line (48; 101) with respect to the first volume (41).

8. Pneumatic actuator (4b) according to one of the claims 5 to 7, wherein the first piston surface (91) and the second piston surface (92) are formed on the same piston (93).

9. Pneumatic actuator (4b) according to one of the claims 5 to 7, wherein the first piston surface (91) and the second piston surface (92) are formed on separate pistons (93) whose movements are mechanically coupled to each other.

10. Pneumatic actuator (4b) according to one of the claims 5 to 9 in dependence on claim 6, wherein the first piston surface (91) and the piston closure element (95) for closing the inlet/outlet opening (45) are formed on the same piston (93).

11. Pneumatic actuator (4b) according to one of the claims 5 to 10, having a cylinder exhaust valve (46) for rapidly draining the working medium from the first volume (41) by opening the inlet/outlet opening, the cylinder exhaust valve (46) having a piston surface (52), on which a force for closing the cylinder exhaust valve (46) is generated when the working medium is applied, and a valve surface (53) on which a force in the opening direction of the cylinder exhaust valve (46) is generated when the working medium is applied, and wherein the valve surface (53) is smaller than the piston surface (52).

12. Pneumatic actuator (4b) according to claim 11, having an exhaust pilot valve (47) for draining working medium from an exhaust valve volume (51) in which the working medium acts on the piston surface (52).

13. Pneumatic actuator (4b) according to claim 11 or 12, wherein a working medium filling line (48) is arranged for filling both the exhaust valve volume (51) and the first volume (41) with working medium under the same pressure.

14. Pneumatic actuator (4b) according to claim 13, wherein a section (101) of the working medium filling line (48), through which the first volume (41) is supplied with the working medium, runs through the cylinder exhaust valve (46), in particular through a shut-off body of the valve.

15. Pneumatic actuator (4b) according to one of the claims 5 to 14, wherein a linear guide of the piston (93) is formed by the piston (93) enclosing a rear closure guide (98) and being linearly movable along the rear closure guide in a direction of movement, and a hollow cylindrical piston connecting element (94) extending in the direction of movement away from the piston (93) encloses a bearing element (14) fixed to the rear closure guide (98), and wherein
the second volume (42) is formed between the piston (93), an inner side of the piston connecting element (94), the bearing element (14) and the rear closure guide (98).

## Revendications

1. Procédé de fonctionnement d'un actionneur pneumatique (4b), qui comprend une première surface de piston (91) qui agit contre un medium gazeux de travail dans un premier volume (41), une pression dans le premier volume (41) provoquant une force d'actionnement sur la première surface de piston (91) dans une première direction;
une second surface de piston (92) qui agit contre le medium de travail dans un second volume (42), une pression dans le second volume (42) sur la second surface de piston (92) provoquant une force d'actionnement dans une second direction opposée à la première direction;
avec les étapes suivantes :
• Remplir le premier volume (41) avec un medium gazeux de travail sous pression;
• Egaliser la pression entre le premier volume (41) et le second volume (42) par un étranglement et ainsi, en raison d'une différence de surface de la première surface de piston (91) et de la seconde surface de piston (92), déplacer l'actionneur dans la première direction;
et
• évacuer au moins une partie du medium de travail du premier volume (41)
**caractérisé en ce que** le procédé comporte l'étape suivante:
• déplacer l'actionneur dans la seconde direction par une chute de pression plus rapide dans le premier volume (41) que dans le second volume (42).

2. Procédé selon la revendication 1, dans lequel le remplissage du premier volume (41) se fait au moyen d'une soupape de remplissage (49).

3. Procédé selon la revendication 1 ou 2, dans lequel la décharge d'au moins une partie du medium de travail du premier volume (41) se fait par l'ouverture d'un orifice d'entrée/sortie du premier volume (41).

4. Procédé selon la revendication 2 et 3, dans lequel avec seulement la soupape de remplissage et l'ouverture d'entrée/sortie, un mouvement alternatif de l'actionneur est réalisé.

5. Actionneur pneumatique (4b) pour la mise en oeuvre du procédé selon l'une des revendications précédentes, comportant
une première surface de piston (91) qui agit contre un medium gazeux de travail dans un premier volume (41), dans lequel une pression dans le premier volume (41) provoque une force d'actionnement dans une première direction sur la première surface de piston (91);
une seconde surface de piston (92) qui agit contre le medium de travail dans un second volume (42), dans lequel une pression dans le second volume (42) sur la seconde surface de piston (92) provoque une force d'actionnement dans une seconde direction opposée à la première direction;
une ouverture d'entrée/sortie (45) du premier volume (41) pour introduire et décharger le medium de travail dans et hors du premier volume (41), respectivement;
dans lequel la première surface de piston (91) est plus grande que la seconde surface de piston (92) ;
**caractérisé en ce que** l'actionneur pneumatique (4b) comporte :
un étranglement entre le premier volume (41) et le second volume (42), qui permet un échange de gaz entre le premier volume (41) et le second volume (42).

6. Actionneur pneumatique (4b) selon la revendication 5, dans lequel un élément de fermeture de piston (95) est disposé pour fermer l'ouverture d'entrée/sortie (45).

7. Actionneur pneumatique (4b) selon la revendication 6, dans lequel l'élément de fermeture de piston (95) est également agencé pour déconnecter une ligne de remplissage de medium de travail (48; 101) par rapport au premier volume (41).

8. Actionneur pneumatique (4b) selon l'une des revendications 5 à 7, dans lequel la première surface de piston (91) et la seconde surface de piston (92) sont formées sur le même piston (93).

9. Actionneur pneumatique (4b) selon l'une des revendications 5 à 7, dans lequel la première surface de piston (91) et la seconde surface de piston (92) sont formées sur des pistons distincts (93) dont les mouvements sont mécaniquement couplés entre eux.

10. Actionneur pneumatique (4b) selon l'une des revendications 5 à 9 en fonction de la revendication 6, dans lequel la première surface de piston (91) et l'élément de fermeture de piston (95) pour fermer l'ouverture d'entrée/sortie (45) sont formés sur le même piston (93).

11. Actionneur pneumatique (4b) selon l'une des revendications 5 à 10, comportant une soupape d'échappement de cylindre (46) pour décharger rapidement le medium de travail du premier volume (41) en ouvrant l'ouverture d'entrée/sortie, la soupape d'échappement de cylindre (46) comportant une surface de piston (52), sur laquelle une force pour fermer la soupape d'échappement de cylindre (46) est générée lorsque le medium de travail est appliqué, et une surface de soupape (53) sur laquelle une force dans la direction d'ouverture de la soupape d'échappement de cylindre (46) est générée lorsque le medium de travail est appliqué, et dans laquelle la surface de soupape (53) est plus petite que la surface de piston (52).

12. Actionneur pneumatique (4b) selon la revendication 11, comportant une soupape pilote d'échappement (47) pour décharger le medium de travail d'un volume de soupape d'échappement (51) dans lequel le medium de travail agit sur la surface de piston (52).

13. Actionneur pneumatique (4b) selon la revendication 11 ou 12, dans lequel une conduite de remplissage de medium de travail (48) est disposée pour remplir à la fois le volume de la soupape d'échappement (51) et le premier volume (41) avec du medium de travail sous la même pression.

14. Actionneur pneumatique (4b) selon la revendication 13, dans lequel une section (101) de la conduite de remplissage de medium de travail (48), par laquelle le premier volume (41) est alimenté en medium de travail, traverse la soupape d'échappement de cylindre (46), en particulier à travers un corps d'arrêt de la soupape.

15. Actionneur pneumatique (4b) selon l'une des revendications 5 à 14, dans lequel un guidage linéaire du piston (93) est formé par le fait que le piston (93) entoure un guidage de fermeture arrière (98) et peut être déplacé linéairement le long du guidage de fermeture arrière dans une direction de déplacement, et un élément de connexion de piston cylindrique creux (94) s'étendant dans la direction de déplacement à partir du piston (93) entoure un élément de palier (14) fixé sur le guidage de fermeture arrière (98), et dans lequel le second volume (42) est formé entre le piston (93), un côté intérieur de l'élément de connexion de piston (94), l'élément de palier (14) et le guidage de fermeture arrière (98).
